# EUROPÄISCHE PATENTSCHRIFT

(11) **EP 2 470 729 B1**
(45) Veröffentlichungstag und Bekanntmachung des Hinweises auf die Patenterteilung: **05.03.2014**
(21) Anmeldenummer: 10760927.3
(22) Anmeldetag: 23.09.2010
(51) Int. Cl.: E04B 9/18, F16B 5/07, F16B 5/10

(54) **Zusammenbauteil und Verfahren zum Herstellen eines Zusammenbauteils**
Assembled component and method for producing an assembled component
Pièce de montage et procédé de fabrication d'une pièce de montage

(30) Priorität: 30.09.2009 DE 102009047831
(43) Veröffentlichungstag der Anmeldung: 04.07.2012
(73) Patentinhaber: Protektorwerk Florenz Maisch GmbH & Co. KG, 76571 Gaggenau (DE)
(72) Erfinder: STUDNIORZ, Thilo, 09306 Rochlitz (DE)
(74) Vertreter: Manitz, Finsterwald & Partner GbR
(86) Internationale Anmeldenummer: PCT/EP2010/005833
(87) Internationale Veröffentlichungsnummer: WO 2011/038859

(56) Entgegenhaltungen:
- EP-A1- 0 557 213
- DE-A1- 4 433 651
- FR-A1- 2 546 939

## Beschreibung

Die vorliegende Erfindung betrifft ein Zusammenbauteil, gemäß dem Oberbegriff des Anspruchs 1. Weiterhin ist die Erfindung auf ein Verfahren zum Herstellen eines solchen Zusammenbauteils gerichtet.

In vielen Bereichen, in denen ebene, flachförmige Bauteile bzw. Bauteile mit solchen Verbindungsbereichen miteinander verbunden werden müssen, erfolgt diese Verbindung durch Niet- oder Schraubverbindungen, die relativ aufwendig und kostenintensiv herzustellen sind.

Ein Beispiel sind Abhängevorrichtungen für Tragschienen, die üblicherweise aus zwei unterschiedlichen Bauteilen bestehen, nämlich aus einem Basisteil, das an seinem unteren Ende einen zum Ankoppeln an Tragschienen für abgehängte Decken ausgebildeten Kopplungsabschnitt besitzt und in seinem oberen Bereich einen Verbindungsbereich umfasst, der mit einem entsprechenden Verbindungsbereich eines federelastischen Verbindungsteils der Abhängevorrichtung verbunden ist. Das federelastische Verbindungsteil ist üblicherweise U-förmig ausgebildet und besitzt in jedem seiner Schenkel zwei Löcher, durch die ein stabförmiges Befestigungsteil hindurchgesteckt werden kann. Aufgrund der Vorspannung des U-förmigen, federelastischen Verbindungsteils wird das stabförmige Befestigungsteil mit dem Verbindungsteil verklemmt, so dass eine justierbare Verbindung zwischen dem Verbindungsteil und dem Befestigungsteil hergestellt werden kann. Die Befestigung des Verbindungsteils an den Basisteil erfolgt üblicherweise durch eine Nietverbindung, die aufwendig herzustellen und mit relativ hohen Kosten verbunden ist.

Auch in weiteren Bereichen, insbesondere bei der Herstellung von Metall- oder Kunststoffprofilen, werden oftmals Verbindungen von ebenen flachförmigen Verbindungsbereichen benötigt.

Aus der EP 0 557 213 Alist ein Zusammenbauteil der eingangs genannten Art bekannt. Der Zusammenbau des ersten und zweiten Bauteils erfolgt dabei durch einen zweistufigen Steckvorgang. Ein ähnliches Zusammenbauteil ist auch aus der DE 44 33 651 A1 bekannt.

Es ist eine Aufgabe der vorliegenden Erfindung, ein Zusammenbauteil der eingangs genannten Art anzugeben, das einfach und kostengünstig herstellbar ist. Weiterhin soll ein Verfahren zum Herstellen eines solchen Zusammenbauteils angegeben werden.

Ausgehend von einem Zusammenbauteil der eingangs genannten Art wird diese Aufgabe erfindungsgemäß durch die Merkmale des Anspruchs 1 gelöst.

Ein erfindungsgemäßes Verfahren zum Herstellen eines solchen Zusammenbauteils ist im Verfahrensanspruch 15 beschrieben.

Erfindungsgemäß wird somit kein zusätzliches Verbindungsteil benötigt, um die beiden Bauteile des Zusammenbauteils miteinander zu verbinden. Durch die ebene, flachförmige Ausbildung der Verbindungsbereiche kann jeweils ein Materialabschnitt aus der Ebene des jeweiligen Verbindungsbereichs herausgebogen werden, wobei dieses Herausbiegen so erfolgt, dass eine Art Teilgewindeabschnitt an jedem der beiden Verbindungsbereiche erzeugt wird. Die entsprechend ausgebildeten Verbindungsabschnitte besitzen schräg verlaufende Führungsflächen, die beim Ineinandergreifen aneinander anliegen und durch Verdrehen der beiden Bauteile gegeneinander im Sinne einer Schraubbewegung die beiden Bauteile zusammenziehen und letztlich fest miteinander verbinden.

Bei miteinander verbundenen Bauteilen wirken die Kanten jeweils als Anlagekanten, so dass in einer vorgegebenen Belastungsrichtung, also beispielsweise in senkrechter Richtung im Falle eines als Abhängevorrichtung ausgebildeten Zusammenbauteils, Kräfte aufgenommen werden können und die beiden Bauteile des Zusammenbauteils sicher zusammengehalten werden.

Nach einer vorteilhaften Ausführungsform der Erfindung liegt das andere Ende der bogenförmigen Kante in der Ebene des Verbindungsbereichs. Vorzugsweise liegt das von der bogenförmigen Kante abgewandt liegende Ende der weiteren Kante ebenfalls in der Ebene des Verbindungsbereichs. Dadurch wird gewährleistet, dass beim Gegeneinanderverdrehen der beiden Bauteile diese vollständig zusammengezogen werden und die ebenen flachförmigen Verbindungsbereiche im zusammengebauten Zustand letztlich aneinander anliegen.

Vorteilhaft sind eine oder mehrere der bogenförmigen Kanten durch in dem jeweiligen Verbindungsbereich ausgebildete bogenförmige Schlitze gebildet. Auf diese Weise können die erforderlichen bogenförmigen Kanten sehr einfach hergestellt werden, ohne dass das Material der Bauteile wesentlich geschwächt wird. Grundsätzlich ist es auch möglich, dass anstelle von Schlitzen größere Öffnungen in die Bauteile eingebracht werden, solange jeweils die erforderlichen bogenförmigen Kanten durch diese Öffnungen gebildet werden.

Nach einer weiteren vorteilhaften Ausführungsform der Erfindung sind die Verbindungsabschnitte eines Bauteils jeweils auf derselben Seite des Bauteils angeordnet. Dadurch wird gewährleistet, dass auf einer Seite eines Bauteils jeweils mindestens zwei Verbindungsabschnitte angeordnet sind, die in jeweils zwei auf einer Seite des anderen Bauteils angeordnete Verbindungsteile eingreifen können.

Bevorzugt ist die weitere Kante geradlinig ausgebildet. Insbesondere verläuft dabei die weitere Kante ausgehend von dem Ende der bogenförmigen Kante in radialer Richtung nach außen oder nach innen. Eine geradlinige Kante kann die im zusammengebauten Zustand auftretenden Kräfte besonders gut aufnehmen, da sie so angeordnet werden kann, dass die auftretenden Kräfte im Wesentlichen senkrecht auf die Kante wirken.

Nach einer weiteren vorteilhaften Ausführungsform der Erfindung sind eine oder mehrere der bogenförmigen Kanten als teilkreisförmige Kante, insbesondere als Viertelkreisbogen ausgebildet. Dadurch ist sichergestellt, dass ein Verdrehen der Bauteile gegeneinander zum Verbinden der beiden Bauteile problemlos möglich ist. Grundsätzlich müssen die Kanten nicht mathematisch exakt teilkreisförmig ausgebildet sein, da beispielsweise durch Toleranzen beim Erzeugen der Schlitze oder Öffnungen auch bei nicht ideal teilkreisförmigen Kanten ein Verdrehen der Bauteile gegeneinander möglich ist.

Nach einer weiteren bevorzugten Ausführungsform der Erfindung sind die Verbindungsabschnitte eines Verbindungsbereichs jeweils punktsymmetrisch zu einem gemeinsamen Mittelpunkt der teilkreisförmigen Kanten angeordnet. Insbesondere besitzen die teilkreisförmigen Kanten jeweils denselben Mittelpunkt. Auch diese Ausbildung unterstützt das einfache Verdrehen der beiden Bauteile gegeneinander beim Verbinden.

Vorteilhaft besitzen die teilkreisförmigen Kanten eines Verbindungsbereichs jeweils denselben Radius. Dabei besitzen bevorzugt die teilkreisförmigen Kanten eines der Verbindungsbereiche einen größeren Radius als die teilkreisförmigen Kanten des anderen Verbindungsbereichs. Dadurch ist gewährleistet, dass die Verbindungsabschnitte beim Zusammenfügen ineinander eingreifen können und sich gegeneinander verdrehen lassen.

Nach einer weiteren vorteilhaften Ausführungsform der Erfindung verläuft jeweils die sich an eine teilkreisförmige Kante mit dem größeren Radius anschließende weitere Kante ausgehend von dem Ende der teilkreisförmigen Kante in radialer Richtung nach innen, während jeweils die sich an eine teilkreisförmige Kante mit dem kleineren Radius anschließende weitere Kante ausgehend von dem Ende der teilkreisförmigen Kante in radialer Richtung nach außen verläuft.

Nach einer weiteren vorteilhaften Ausführungsform der Erfindung sind die beiden Bauteile und insbesondere die Verbindungsbereiche miteinander verrastet. Dazu können beispielsweise in den Verbindungsbereichen beider Bauteile Sicken oder sonstige Rastelemente ausgebildet sein, die bei gegeneinander verdrehten Bauteilen ineinander eingreifen oder sich hintergreifen.

Vorteilhaft ist die Verbindung zwischen dem ersten und dem zweiten Verbindungsbereich lösbar ausgebildet. Dies kann beispielsweise ohne oder mit der zuvor genannten Rastverbindung oder durch eine zusätzliche Schraubverbindung erreicht werden. Grundsätzlich ist es auch möglich, dass nach dem vollständigen gegeneinander Verdrehen der Bauteile diese unlösbar miteinander verbunden werden. Beispielsweise kann dies durch ein Druckfügeverfahren wie Verclinchen oder Vercrimpen oder durch Verklemmen, Verquetschen, Verpressen, Verschweißen, Verkleben oder Vernieten erfolgen.

Bevorzugt bestehen das erste Bauteil und/oder das zweite Bauteil aus Metall oder aus Kunststoff.

Ein erfindungsgemäßes Zusammenbauteil kann beispielsweise als Abhängevorrichtung für Tragschienen, insbesondere für abgehängte Decken oder dergleichen, verwendet werden. Eine solche Abhängevorrichtung umfasst ein Basisteil, das zur Kopplung mit einer Tragschiene ausgebildet ist, und ein an dem Basisteil befestigtes federelastisches Verbindungsteil, das zum justierbaren Verbinden des Basisteils mit einem Befestigungsteil ausgebildet ist. Die Abhängevorrichtung ist durch ein erfindungsgemäß ausgebildetes Zusammenbauteil gebildet, wobei das Basisteil durch das erste Bauteil und das Verbindungsteil durch das zweite Bauteil gebildet wird.

Weitere vorteilhafte Ausführungsformen sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: eine perspektivische Darstellung einer Abhängevorrichtung nach dem Stand der Technik,
- Fig. 2: eine perspektivische Darstellung einer weiteren Abhängevorrichtung nach dem Stand der Technik,
- Fig. 3: ein erstes Bauteil eines erfindungsgemäß ausgebildeten Zusammenbauteils in Vorderansicht,
- Fig. 4: ein Schnittmuster für das erste Bauteil nach Fig. 3,
- Fig. 5: ein zweites Bauteil eines erfindungsgemäß ausgebildeten Zusammenbauteils in Vorderansicht,
- Fig. 6: ein Schnittmuster für das zweite Bauteil nach Fig. 5,
- Fig. 7: eine perspektivische Rückansicht des zweiten Bauteils nach Fig. 6,
- Fig. 8 bis 10: das erste und das zweite Bauteil gemäß den Fig. 3 und 5 in drei unterschiedlichen Stellungen während des Zusammenbaus,
- Fig. 11: eine Vorderansicht des Zusammenbauteils im zusammengebauten Zustand.

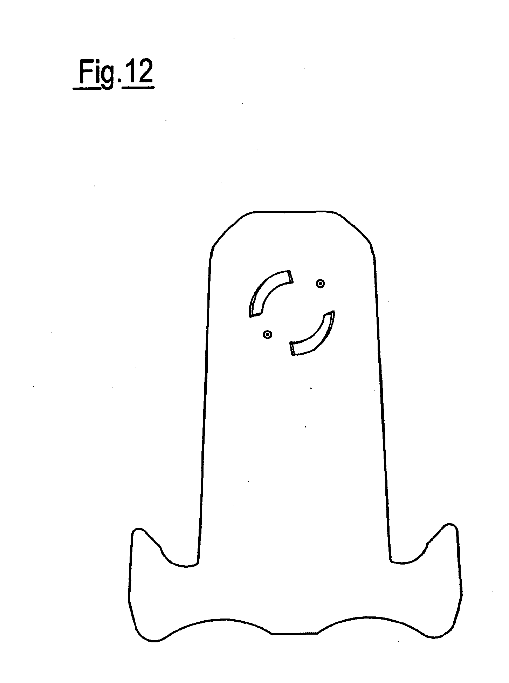

- Fig. 12: eine Rückansicht des Zusammenbauteils im zusammengebauten Zustand.

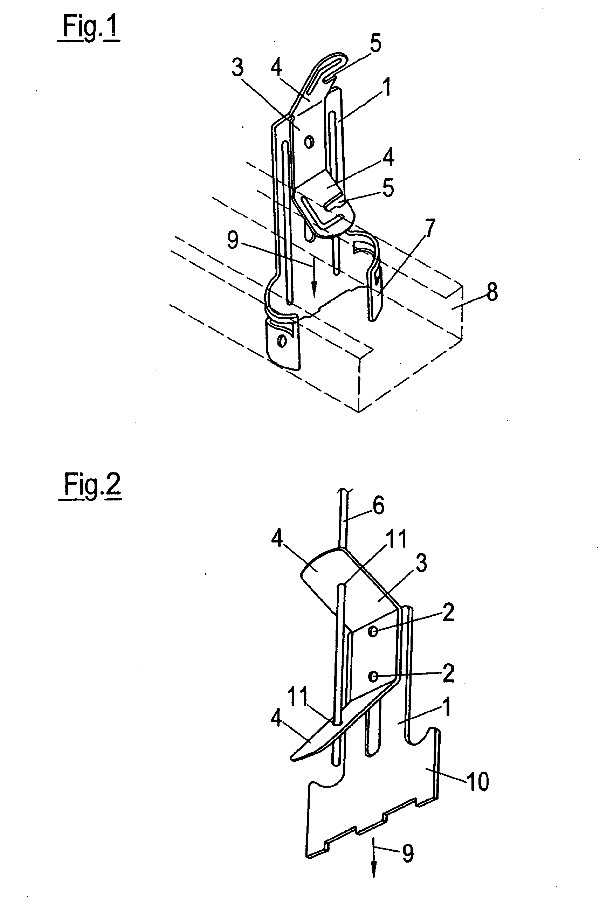

Fig. 1 zeigt ein Zusammenbauteil in Form einer bekannten Abhängevorrichtung, die ein Basisteil 1 sowie ein an dem Basisteil 1 über eine Niete 2 befestigtes Verbindungsteil 3 umfasst. Das Verbindungsteil besitzt einen U-förmigen Längsschnitt mit zwei Schenkeln 4, in denen schlitzförmige Öffnungen 5 ausgebildet sind, in die ein stangenförmiges Befestigungsteil 6 (siehe Fig. 2) seitlich eingeschoben werden kann.

Während das Basisteil 1 üblicherweise aus einfachem Metallblech besteht, ist das Verbindungsteil 3 aus Federstahl ausgebildet, um das Befestigungsteil 6 sicher in den Öffnungen 5 zu halten. Dazu werden zunächst die beiden Schenkel 4 aufeinander zu gebogen und nach Einsetzen des Befestigungsteils 5 in die Öffnungen 5 wieder freigegeben, so dass das Befestigungsteil 6 in den Öffnungen 5 aufgrund der Federvorspannung des Verbindungsteils 3 eingeklemmt wird. Das obere Ende des Befestigungsteils 6 kann dann in üblicher Weise an einer Decke befestigt werden, so dass letztlich die gesamte Abhängevorrichtung an der Decke sicher befestigt ist.

Am unteren Ende des Basisteils 1 ist ein Kopplungsabschnitt 7 ausgebildet, der zur Kopplung mit einer gestrichelt dargestellten Tragschiene 8 ausgebildet ist. An der Tragschiene 8 können weitere quer verlaufende Tragschienen ausgebildet sein, die beispielsweise zum Tragen von Platten für abgehängte Decken ausgebildet sind.

Bei montierter Abhängevorrichtung werden das Basisteil 1 sowie das Verbindungsteil 2 durch das Gewicht der Tragschiene 8 sowie der von dieser getragenen Elemente in einer durch einen Pfeil 9 dargestellten Belastungsrichtung belastet.

Fig. 2 zeigt eine weitere Abhängevorrichtung nach dem Stand der Technik, die sich von der Abhängevorrichtung nach Fig. 1 durch einen abgewandelten Kopplungsabschnitt 10 sowie abgewandelte Öffnungen 11 in den Schenkeln 4 des Verbindungsteils 3 unterscheidet. Die Öffnungen 11 sind bei der Ausgestaltung nach Fig. 2 nicht seitlich offen ausgebildet, so dass das Befestigungsteil 6 nicht seitlich eingeführt werden kann, sondern durch die Öffnungen 5 hindurch gesteckt werden muss. Weiterhin ist das Verbindungsteil 3 bei der Abhängevorrichtung nach Fig. 2 über zwei Nieten 2 mit dem Basisteil 1 verbunden.

Grundsätzlich entsprechen der Aufbau und insbesondere die Befestigung des Verbindungsteils 3 an dem Basisteil 1 bei der Ausgestaltung nach Fig. 2 jedoch der Ausgestaltung nach Fig. 1, so dass ähnliche oder gleiche Elemente mit den gleichen Bezugszeichen wie in Fig. 1 bezeichnet sind.

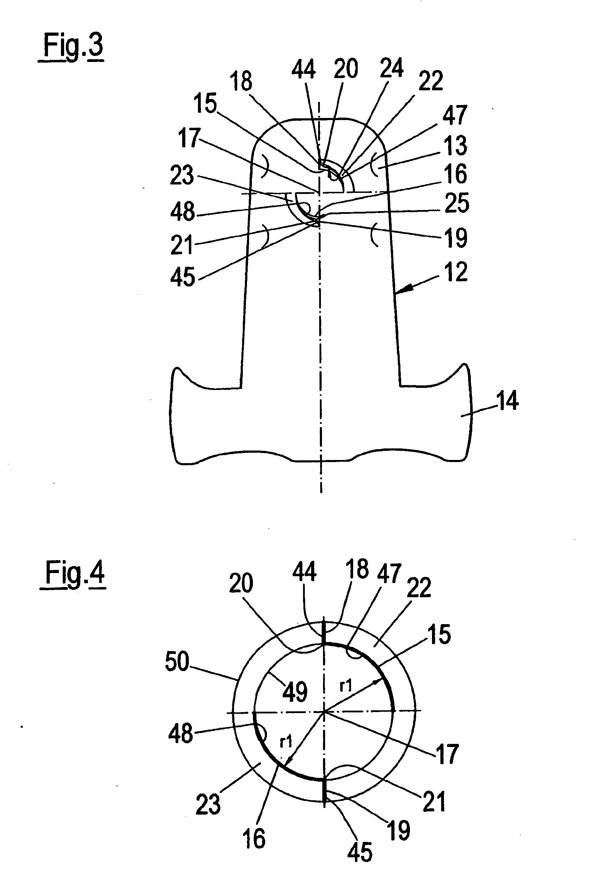

Fig. 3 zeigt ein erstes Bauteil'12 eines erfindungsgemäß ausgebildeten Zusammenbauteils, das ein Basisteil einer erfindungsgemäßen Abhängevorrichtung bildet. Das erste Bauteil 12 umfasst in seinem oberen Bereich einen ersten ebenen flachförmigen Verbindungsbereich 13 und in seinem unteren Bereich einen Kopplungsabschnitt 14, der zum Ankoppeln an eine Tragschiene ausgebildet ist.

In dem ersten ebenen flachförmigen Verbindungsbereich 13 sind zwei viertelkreisförmige Schlitze 15, 16 ausgebildet, die punktsymmetrisch zu einem gemeinsamen Mittelpunkt 17 angeordnet sind.

Zur besseren Veranschaulichung ist in Fig. 4 eine vergrößerte Darstellung des entsprechenden Schnittmusters gezeigt. Aus dieser Darstellung ist deutlich erkennbar, dass die Schlitze 15, 16 viertelkreisförmig um den gemeinsamen Mittelpunkt 17 verlaufen und sich an jeden der viertelkreisförmigen Schlitze 15, 16 jeweils ein radial nach außen verlaufender geradliniger Schlitz 18, 19 anschließt.

Aus Fig. 3 ist ersichtlich, dass von den Schlitzen 15, 18 bzw. 16, 19 berandete Materialabschnitte des ersten Bauteils 12 aus der Ebene des ersten Verbindungsbereichs 13 nach oben herausgebogen sind. Der von den Schlitzen 15, 18 bzw. 16, 19 berandete Materialabschnitt bildet je einen Verbindungsabschnitt 22, 23 des ersten Verbindungsbereichs, wobei jeder Verbindungsabschnitt 22, 23 eine schräg zur Ebene des ersten Verbindungsbereichs 13 verlaufende Führungsfläche 24, 25 (Unterseite der Verbindungsabschnitte 22, 23 in Fig. 3) umfasst. Die Verbindungsabschnitte 22, 23 sind durch bogenförmige Kanten 47, 48 radial nach innen begrenzt, wobei jeweils ein Ende 20, 21 der bogenförmigen Kanten 47, 48 in einer Richtung senkrecht zur Ebene des ersten Verbindungsbereichs 13 beabstandet angeordnet ist. An die bogenförmigen Kanten 47, 48 schließen sich radial nach außen verlaufende geradlinige stirnseitige weitere Kanten 44, 45 an.

Wie weiterhin insbesondere aus Fig. 4 erkennbar ist, besitzen die viertelkreisförmigen Schlitze 15, 16 jeweils den gleichen Radius r₁.

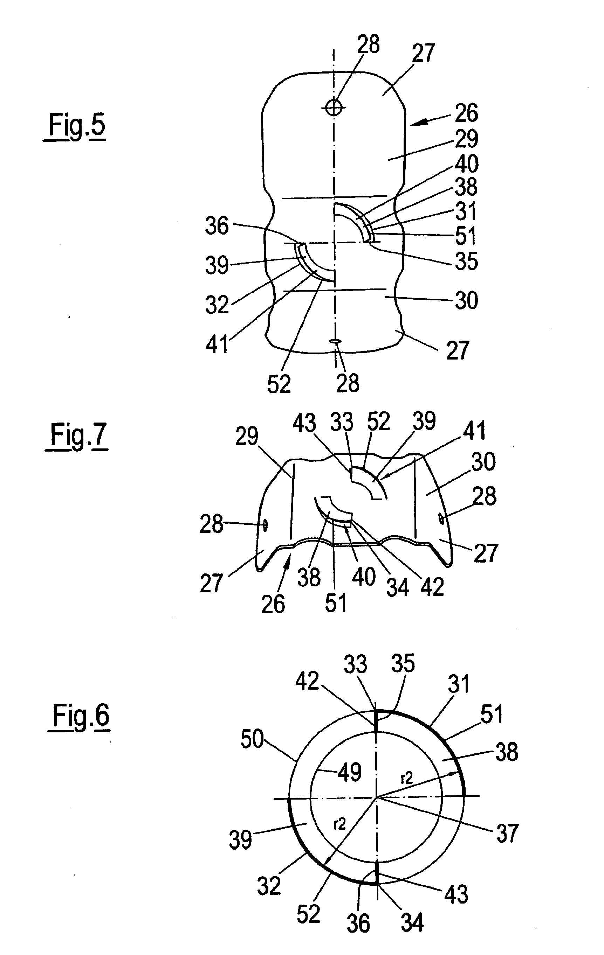

Fig. 5 zeigt ein zweites Bauteil 26 des erfindungsgemäßen Zusammenbauteils, das ein Verbindungsteil der Abhängevorrichtung bildet. Das zweite Bauteil 26 besitzt einen U-förmigen Längsschnitt mit zwei Schenkeln 27, in denen jeweils eine Öffnung 28 ausgebildet ist. Das zweite Bauteil 26 ist aus Federstahl ausgebildet und kann, wie es in den Fig. 1 und 2 zum Stand der Technik dargestellt ist, zur Aufnahme eines stangenförmigen Befestigungsteils verwendet werden.

Ein die beiden Schenkel 27 verbindender Mittelteil 29 des zweiten Bauteils 26 umfasst einen zweiten ebenen flachförmigen Verbindungsbereich 30.

In dem zweiten Verbindungsbereich 30 sind zwei viertelkreisförmige Schlitze 31, 32 ausgebildet, wobei sich jeweils an ein Ende 33, 34 der viertelkreisförmigen Schlitze 31, 32 ein geradliniger Schlitz 35, 36 radial nach innen verlaufend anschließt. Die einzelnen Schlitze 31, 32, 35, 36 sind in einem in Fig. 6 dargestellten Schnittmuster deutlicher zu erkennen.

Die viertelkreisförmigen Schlitze 31, 32 besitzen einen gemeinsamen Mittelpunkt 37 und jeweils gleich große Radien r₂.

Wie insbesondere ein Vergleich der Fig. 4 und 6 ergibt, ist der Radius r₂ größer als der Radius r₁. Die in den Fig. 4 und 6 eingezeichneten Hilfskreislinien 49 wie auch die Hilfskreislinien 50 sind identisch, so dass jeweils die freien Enden der Schlitze 18, 19 aus Fig. 4 auf der Hilfsreislinie 50 der viertelkreisförmigen Schlitze 31, 32 (Fig. 6) zu liegen kommen, während die freien Enden der Schlitze 35, 36 aus Fig. 6 jeweils auf der Hilfskreislinie 49 der viertelkreisförmigen Schlitze 15, 16 (Fig. 4) zu liegen kommen.

Aus Fig. 5 und insbesondere auch aus Fig. 7 ist erkennbar, dass von den Schlitzen 31, 35 bzw. 32, 36 berandete Materialabschnitte des zweiten Bauteils 26 aus der Ebene des zweiten Verbindungsbereichs 30 in ähnlicher Weise herausgebogen sind, wie es zu der Fig. 3 beschrieben wurde. Allerdings sind die Materialabschnitte in entgegengesetzter Richtung, d.h. in Fig. 5 in die Zeichnungsebene hinein nach hinten aus dem zweiten Verbindungsbereich 30 herausgebogen. Die herausgebogenen Materialabschnitte bilden Verbindungsabschnitte 38, 39 des zweiten Verbindungsbereichs 30, die jeweils durch bogenförmige Kanten 51, 52 radial nach außen begrenzt sind. An die bogenförmigen Kanten 51, 52 schließen sich radial nach innen verlaufende geradlinige stirnseitige weiter Kanten 42, 43 an. Während die Enden 33, 34 der bogenförmigen Kanten 51, 52 wiederum in einer Richtung senkrecht zur Ebene des zweiten Verbindungsbereichs 30 beabstandet angeordnet sind, sind die gegenüberliegenden Enden in der Ebene des zweiten Verbindungsbereichs 30 angeordnet, so dass die Verbindungsabschnitte 38, 39 jeweils schräg zur Ebene des zweiten Verbindungsbereichs verlaufende Führungsflächen 40, 41 umfassen.

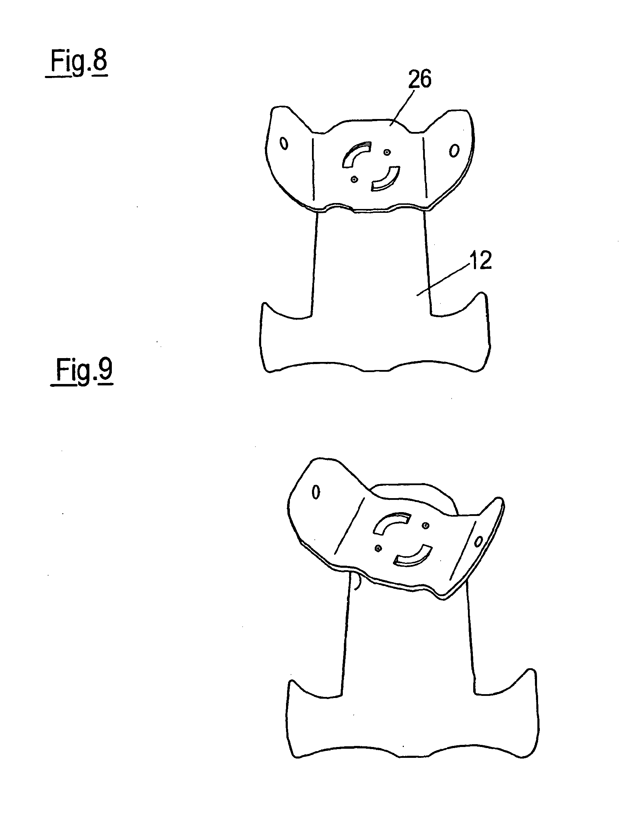

Die Verbindungsabschnitte 22, 23 und 38, 39 sind somit über einen Teilumfang von ca. 90° wendelförmig oder schraubenförmig ausgebildet und können aufgrund ihrer Dimensionierung miteinander verschraubt werden, wie es in den Fig. 8 bis 11 dargestellt ist.

Zum Verbinden des ersten Bauteils 12 mit dem zweiten Bauteil 26 werden die beiden Bauteile 12, 26 zunächst so aufeinander gesetzt, wie es in Fig. 8 dargestellt ist. Dabei werden zunächst die stirnseitigen weiteren Kanten 42, 43 der Verbindungsabschnitte 38, 39 gegenüber den stirnseitigen weiteren Kanten 44, 45 der Verbindungsabschnitte 22, 23 positioniert, wie es in Fig. 8 dargestellt ist. Das zweite Bauteil 26 wird dann so an das erste Bauteil 12 angedrückt und im Uhrzeigersinn verdreht, dass die stirnseitigen weiteren Kanten 42, 43 unter die stirnseitigen weiteren Kanten 44, 45 geschoben werden, so dass die Führungsflächen 40, 41 unterhalb der Führungsflächen 24, 25 angeordnet sind und an diesen zur Anlage kommen.

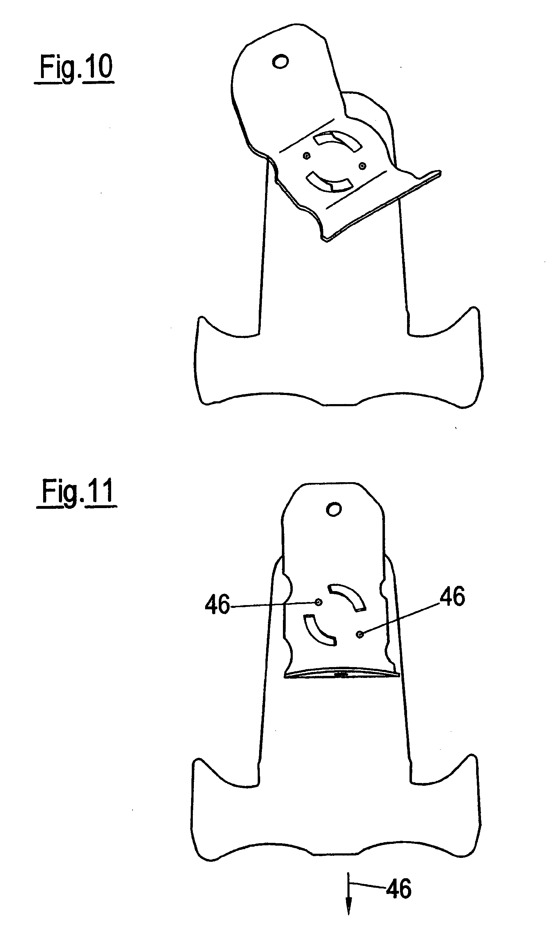

Bei einem weiteren Verdrehen im Uhrzeigersinn gemäß den Fig. 9 und 10 werden das erste und das zweite Bauteil 12, 26 durch die aneinander gleitenden Führungsflächen 24, 25, 40, 41 zusammengezogen, bis die in Fig. 11 dargestellte Endstellung erreicht wird. In diesem zusammengebauten Zustand liegen der erste und der zweite Verbindungsabschnitt 13, 30 flächig aneinander an und werden durch die Führungsflächen 24, 25, 40, 41 aneinander angepresst und damit fest zusammengehalten.

Zusätzlich können noch an dem ersten und dem zweiten Bauteil 12, 26 Rastelemente vorgesehen sein, um in der in Fig. 11 dargestellten Endstellung eine Verrastung der beiden Bauteile 12, 26 zu erreichen. Diese Verrastung kann beispielsweise durch Sicken 46 erfolgen, die in Fig. 11 angedeutet sind und in entsprechende, nicht dargestellte Sicken in dem ersten Bauteil 12 eingreifen oder entsprechende Vorsprünge hintergreifen können. Anstelle von Sicken können auch sonstige Rastelemente beispielsweise in Form von Erhebungen, Vertiefungen oder Öffnungen vorgesehen sein.

Die Verbindung zwischen dem ersten und dem zweiten Bauteil 12, 26, kann insbesondere in einer durch einen Pfeil 46 in Fig. 11 angedeuteten Belastungsrichtung sowie senkrecht dazu belastet werden, ohne dass die Verbindung sich lösen kann. Auch eine Belastung in Richtung dazwischen liegender Winkel ist jederzeit möglich, da aufgrund der konzentrischen Ausgestaltung der Verbindung alle angreifenden Kräfte ohne Lösen der Verbindung sicher aufgenommen werden, solange die Kräfte im Wesentlichen durch die Mittelpunkte 17, 37 verlaufen.

Als flachförmige Elemente gemäß der Erfindung sind Metallbleche sowie alle dünnen, plattenförmigen oder tafelförmigen Bauteile bzw. Verbindungsbereiche zu verstehen, deren Dicke deutlich geringer ist als deren Länge und Breite, wobei die Elemente sowohl aus Metall als auch aus Kunststoff oder anderen geeigneten Materialien hergestellt sein können.

### Bezugszeichenliste

- 1: Basisteil
- 2: Niete
- 3: Verbindungsteil
- 4: Schenkel
- 5: Öffnungen
- 6: Befestigungsteil
- 7: Kopplungsabschnitt
- 8: Tragschiene
- 9: Pfeil (Belastungsrichtung)
- 10: Kopplungsabschnitt
- 11: Öffnungen
- 12: erstes Bauteil
- 13: erster Verbindungsbereich
- 14: Kopplungsabschnitt
- 15: Schlitz
- 16: Schlitz
- 17: Mittelpunkt
- 18: Schlitz
- 19: Schlitz
- 20: Ende der Kante 47
- 21: Ende der Kante 48
- 22: Verbindungsabschnitt
- 23: Verbindungsabschnitt
- 24: Führungsfläche
- 25: Führungsfläche
- 26: zweites Bauteil
- 27: Schenkel
- 28: Öffnungen
- 29: Mittelteil
- 30: zweiter Verbindungsbereich
- 31: Schlitz
- 32: Schlitz
- 33: Ende der Kante 51
- 34: Ende der Kante 52
- 35: Schlitz
- 36: Schlitz
- 37: Mittelpunkt
- 38: Verbindungsabschnitt
- 39: Verbindungsabschnitt
- 40: Führungsfläche
- 41: Führungsfläche
- 42: Kante
- 43: Kante
- 44: Kante
- 45: Kante
- 46: Belastungsrichtung
- 47: bogenförmige Kante
- 48: bogenförmige Kante
- 49: Hilfskreislinie
- 50: Hilfskreislinie
- 51: bogenförmige Kante
- 52: bogenförmige Kante
- r₁: Radius
- r₂: Radius

## Patentansprüche

1. Zusammenbauteil umfassend ein erstes und ein zweites Bauteil (12, 26), wobei das erste Bauteil (12) einen ersten ebenen flachförmigen Verbindungsbereich (13) und das zweite Bauteil (26) einen mit dem ersten Verbindungsbereich (13) verbundenen zweiten ebenen flachförmigen Verbindungsbereich (30) umfasst,
wobei die Verbindungsbereiche (13, 30) jeweils zumindest zwei Verbindungsabschnitte (22, 23, 38, 39) umfassen, die jeweils als aus der Ebene des jeweiligen Verbindungsbereichs (13, 30) herausgebogene Materialabschnitte ausgebildet sind,
wobei, bei zusammengebautem ersten und zweiten Bauteil (12, 26), jeweils zwei Verbindungsabschnitte (22, 23, 38, 39) ineinander greifen,
wobei die Verbindungsabschnitte (22, 23, 38, 39) jeweils eine im Wesentlichen bogenförmig ausgebildete Kante (47, 48, 51, 52) mit je zwei Enden (20, 21, 33, 34) besitzen,
wobei eines der Enden (20, 21, 33, 34) der bogenförmigen Kante (47, 48, 51, 52) in einer Richtung senkrecht zur Ebene des jeweiligen Verbindungsbereichs (13, 30) beabstandet angeordnet ist,
wobei sich an dieses Ende (20, 21, 33, 34) der bogenförmigen Kante (47, 48, 51, 52) eine schräg oder quer zu der bogenförmigen Kante (47, 48, 51, 52) verlaufende weitere Kante (42, 43, 44, 45) des Verbindungsabschnitts (22, 23, 38, 39) anschließt, und
wobei die Verbindungsabschnitte (22, 23, 38, 39) jeweils eine schräg zur Ebene des jeweiligen Verbindungsbereichs (13, 30) verlaufende Führungsfläche (24, 25, 40, 41) umfassen, **dadurch gekennzeichnet, dass** jeweils die Führungsfläche (24, 25) eines Verbindungsabschnitts (22, 23) des ersten Verbindungsbereichs (13) und die Führungsfläche (40, 4 1) eines Verbindungsabschnitts (38, 39) des zweiten Verbindungsbereichs (30) so ausgebildet sind, dass sie beim Zusammenbauen des ersten und des zweiten Bauteils (12, 26) aneinander gleiten und bei zusammengebautem ersten und zweiten Bauteil (12, 26) zumindest bereichsweise aneinander anliegen.

2. Zusammenbauteil nach Anspruch 1,
dass das andere Ende der bogenförmigen Kante (47, 48, 51, 52) in der Ebene des Verbindungsbereichs (13, 30) liegt.

3. Zusammenbauteil nach Anspruch 1 oder 2,
**dadurch gekennzeichnet,**
**dass** das von der bogenförmigen Kante (47, 48, 51, 52) abgewandt liegende Ende der weiteren Kante (42, 43, 44, 45) in der Ebene des Verbindungsbereichs (13, 30) liegt.

4. Zusammenbauteil nach zumindest einem der vorhergehenden Ansprüche,
**dadurch gekennzeichnet,**
**dass** eine oder mehrere der bogenförmigen Kanten (47, 48, 51, 52) durch in dem jeweiligen Verbindungsbereich (13, 30) ausgebildete bogenförmige Schlitze (15, 16, 31, 32) gebildet sind.

5. Zusammenbauteil nach zumindest einem der vorhergehenden Ansprüche,
**dadurch gekennzeichnet,**
**dass** die Verbindungsabschnitte (22, 23, 38, 39) eines Bauteils (12, 26) jeweils auf derselben Seite des Bauteils (12, 26) angeordnet sind.

6. Zusammenbauteil nach zumindest einem der vorhergehenden Ansprüche,
**dadurch gekennzeichnet,**
**dass** die weitere Kante (42, 43, 44, 45) geradlinig ausgebildet ist.

7. Zusammenbauteil nach zumindest einem der vorhergehenden Ansprüche,
**dadurch gekennzeichnet,**
**dass** die weitere Kante (42, 43, 44, 45) ausgehend von dem Ende (20, 21, 33, 34) der bogenförmigen Kante (47, 48, 51, 52) in radialer Richtung nach außen oder nach innen verläuft.

8. Zusammenbauteil nach zumindest einem der vorhergehenden Ansprüche,
**dadurch gekennzeichnet,**
**dass** eine oder mehrere der bogenförmigen Kanten (47, 48, 51, 52) als teilkreisförmige Kante, insbesondere als Viertelkreisbogen ausgebildet sind
und/oder
**dass** die Verbindungsabschnitte (22, 23, 38, 39) eines Verbindungsbereichs (13, 30) jeweils punktsymmetrisch zu einem gemeinsamen Mittelpunkt (17, 37) der teilkreisförmigen Kanten (47, 48, 51, 52) angeordnet sind
und/oder
**dass** die teilkreisförmige Kanten (47, 48, 51, 52) jeweils denselben Mittelpunkt (17, 37) besitzen
und/oder
**dass** die teilkreisförmigen Kanten (47, 48, 51, 52) eines Verbindungsbereichs (13, 30) jeweils denselben Radius (r₁, r₂) besitzen.

9. Zusammenbauteil nach zumindest einem der vorhergehenden Ansprüche,,
**dadurch gekennzeichnet,**
**dass** die teilkreisförmigen Kanten (51, 52) eines der Verbindungsbereiche (30) einen größeren Radius (r₂) besitzen als die teilkreisförmigen Kanten des anderen Verbindungsbereichs (13).

10. Zusammenbauteil nach Anspruch 9,
**dadurch gekennzeichnet,**
**dass** jeweils die sich an eine teilkreisförmige Kante (51, 52) mit dem größeren Radius (r₂) anschließende weitere Kante (42, 43) ausgehend von dem Ende (33, 34) der teilkreisförmigen Kante (51, 52) in radialer Richtung nach innen verläuft und dass jeweils die sich an eine teilkreisförmige Kante (47, 48) mit dem kleineren Radius (r₁) anschließende weitere Kante (44, 45) ausgehend von dem Ende (20, 21) der teilkreisförmigen Kante (47, 48) in radialer Richtung nach außen verläuft.

11. Zusammenbauteil nach zumindest einem der vorhergehenden Ansprüche,
**dadurch gekennzeichnet,**
**dass** die beiden Bauteile (12, 26) und insbesondere die Verbindungsbereiche (13, 30) miteinander verrastet sind.

12. Zusammenbauteil nach zumindest einem der vorhergehenden Ansprüche,
**dadurch gekennzeichnet,**
**dass** das erste Bauteil (12) und/oder das zweite Bauteil (26) aus Metall oder aus Kunststoff bestehen.

13. Zusammenbauteil nach zumindest einem der vorhergehenden Ansprüche,
**dadurch gekennzeichnet,**
**dass** die Verbindung zwischen dem ersten und dem zweiten Verbindungsbereich (13, 30) lösbar ausgebildet ist.

14. Abhängevorrichtung für Tragschienen, insbesondere für abgehängte Decken oder dergleichen, mit einem Basisteil, das zur Kopplung mit einer Tragschiene ausgebildet ist, und mit einem an dem Basisteil befestigten federelastischen Verbindungsteil, das zum justierbaren Verbinden des Basisteils mit einem Befestigungsteil ausgebildet ist,
**dadurch gekennzeichnet,**
**dass** die Abhängevorrichtung als Zusammenbauteil nach zumindest einem der vorhergehenden Ansprüche ausgebildet ist, wobei das Basisteil durch das erste Bauteil (12) und das Verbindungsteil durch das zweite Bauteil (26) gebildet wird.

15. Verfahren zum Herstellen eines Zusammenbauteils, insbesondere eines Zusammenbauteils nach einem der Ansprüche 1 bis 13, umfassend ein erstes und ein zweites Bauteil (12, 26), wobei das erste Bauteil (12) einen ersten ebenen flachförmigen Verbindungsbereich (13) und das zweite Bauteil (26) einen mit dem ersten Verbindungsbereich (13) verbundenen zweiten ebenen flachförmigen Verbindungsbereich (30) umfasst, wobei
in den Verbindungsbereichen (13, 30) jeweils zumindest zwei Verbindungsabschnitte (22, 23, 38, 39) mit jeweils einer im Wesentlichen bogenförmig ausgebildete Kante (47, 48, 51, 52) mit je zwei Enden (20, 21, 33, 34) erzeugt werden, indem
in den Verbindungsbereichen (13, 30) Schlitze (15, 16, 31, 32) oder Öffnungen zum Bilden der im Wesentlichen bogenförmige Kanten (47, 48, 51, 52) erzeugt werden,
jeweils durch Erzeugen eines weiteren Schlitzes (18, 19, 35, 36) oder einer weiteren Öffnung an einem der Enden (20, 21, 33, 34) der bogenförmigen Kante (47, 48, 51, 52) eine sich daran anschließende, schräg oder quer zu der bogenförmigen Kante (47, 48, 51, 52) verlaufende weitere Kante (42, 43, 44, 45) erzeugt wird, und
jeweils von der bogenförmigen Kante (47, 48, 51, 52) sowie der weiteren Kante (42, 43, 44, 45) berandete Materialabschnitte aus der Ebene des jeweiligen Verbindungsbereichs (13, 30) herausgebogen werden, so dass ein Ende (20, 21, 33, 34) der bogenförmigen Kante (47, 48, 51, 52) in einer Richtung senkrecht zur Ebene des jeweiligen Verbindungsbereichs (13, 30) beabstandet angeordnet ist und die Verbindungsabschnitte (22, 23, 38, 39) jeweils eine schräg zur Ebene des jeweiligen Verbindungsbereichs (13, 30) verlaufende Führungsfläche (24, 25, 40, 41) umfassen, **dadurch gekennzeichnet, dass**
die Bauteile (12, 26) so aneinander angesetzt und gegeneinander verdreht werden, dass jeweils zwei Verbindungsabschnitte (22, 23, 38, 39) ineinander greifen und jeweils die Führungsfläche (24, 25) eines Verbindungsabschnitts (22, 23) des ersten Verbindungsbereichs (13) an der Führungsfläche (40, 41) eines Verbindungsabschnitts (38, 39) des zweiten Verbindungsbereichs (30) entlang gleitet bis die Führungsflächen (24, 25, 40, 41) zumindest bereichsweise aneinander anliegen.

## Claims

1. A component assembly comprising a first and a second component (12, 26), wherein the first component (12) comprises a first planar, shallow connection region (13) and the second component (26) comprises a second planar, shallow connection region (30) connected to the first connection region (13);
wherein the connection regions (13, 30) each comprise at least two connection sections (22, 23, 38, 39) which are each formed as material sections bent out of the plane of the respective connection region (13, 30);
wherein, with assembled first and second components (12, 26), two respective connection sections (22, 23, 38, 39) engage into one another,
wherein the connection sections (22, 23, 38, 39) each have a substantially arcuate edge (47, 48, 51, 52) each having two ends (20, 21, 33, 34);
wherein one of the ends (20, 21, 33, 34) of the arcuate edge (47, 48, 51, 52) is arranged spaced apart in a direction perpendicular to the plane of the respective connection region (13, 30);
wherein a further edge (42, 43, 44, 45) of the connection section (22, 23, 38, 39) which extends obliquely or transversely to the arcuate edge (47, 48, 51, 52) adjoins this end (20, 21, 33, 34) of the arcuate edge (47, 48, 51, 52);
wherein the connection sections (22, 23, 38, 39) each comprise a guide surface (24, 25, 40, 41) extending obliquely to the plane of the respective connection region (13, 30);
**characterized in that**
the respective guide surface (24, 25) of a connection section (22, 23) of the first connection region (13) and the guide surface (40, 41) of a connection section (38, 39) of the second connection region (30) being designed so that, on the assembly of the first and second components (12, 26), they slide along one another and, with assembled first and second components (12, 26), they contact one another at least regionally.

2. A component assembly in accordance with claim 1,
**characterized in that**
the other end of the arcuate edge (47, 48, 51, 52) lies in the plane of the connection region (13, 30).

3. A component assembly in accordance with claim 1 or claim 2,
**characterized in that**
the end of the further edge (42, 43, 44, 45) disposed remote from the arcuate edge (47, 48, 51, 52) lies in the plane of the connection region (13, 30).

4. A component assembly in accordance with at least one of the preceding claims,
**characterized in that**
one or more of the arcuate edges (47, 48, 51, 52) are formed by arcuate slits (15, 16, 31, 32) formed in the respective connection region (13, 30).

5. A component assembly in accordance with at least one of the preceding claims,
**characterized in that**
the connection sections (22, 23, 38, 39) of a component (12, 26) are each arranged on the same side of the component (12, 26).

6. A component assembly in accordance with at least one of the preceding claims,
**characterized in that**
the further edge (42, 43, 44, 45) is made as a straight line.

7. A component assembly in accordance with at least one of the preceding claims,
**characterized in that**
the further edge (42, 43, 44, 45) extends, starting from the end (20, 21, 33, 34) of the arcuate edge (47, 48, 51, 52), outwardly or inwardly in the radial direction.

8. A component assembly in accordance with at least one of the preceding claims,
**characterized in that**
one or more of the arcuate edges (47, 48, 51, 52) are formed as a partially circular edge, in particular as a 90 degree circular arc; and/or
**in that** the connection sections (22, 23, 38, 39) of a connection region (13, 30) are each arranged with point symmetry to a common center (17, 37) of the partially circular edges (47, 48, 51, 52); and/ or
**in that** the partially circular edges (47, 48, 51, 52) each have the same center (17, 37);
and/or
**in that** the partially circular edges (47, 48, 51, 52) of a connection region (13, 30) each have the same radius (n₁, r₂).

9. A component assembly in accordance with at least one of the preceding claims,
**characterized in that**
the partially circular edges (51, 52) of one of the connection regions (30) have a larger radius (r₂) than the partially circular edges of the other connection region (13).

10. A component assembly in accordance with claim 9,
**characterized in that**
the respective further edge (42, 43) adjoining a partially circular edge (51, 52) with the larger radius (r₂) extends, starting from the end (33, 34) of the partially circular edge (51, 52), inwardly in the radial direction; and **in that** the respective further edge (44, 45) adjoining a partially circular edge (47, 48) with the smaller radius (n₁) extends, starting from the end (20, 21) of the partially circular edge (47, 48), outwardly in the radial direction.

11. A component assembly in accordance with at least one of the preceding claims,
**characterized in that**
the two components (12, 26) and in particular the connection regions (13, 30) are latched to one another.

12. A component assembly in accordance with at least one of the preceding claims,
**characterized in that**
the first component (12) and/or the second component (26) comprise metal or plastic.

13. A component assembly in accordance with at least one of the preceding claims,
**characterized in that**
the connection between the first and second connection regions (13, 30) is made releasable.

14. A suspension apparatus for carrier rails, in particular for suspended ceilings or the like, having a base part which is designed for coupling to a carrier rail, and having a spring-elastic connection part which is fastened to the base part and which is designed for an adjustable connection of the base part to a fastening part,
**characterized in that**
the suspension apparatus is designed as a component assembly in accordance with at least one of the preceding claims, with the base part being formed by the first component (12) and the connection part by the second component (26).

15. A method of manufacturing a component assembly, in particular a component assembly in accordance with any one of the claims 1 to 13, comprising a first and a second component (12, 26), wherein the first component (12) comprises a first planar, shallow connection region (13) and the second component (26) comprises a second planar, shallow connection region (30) connected to the first connection region (13),
wherein at least two respective connection sections (22, 23, 38, 39) respectively having a substantially arcuate edge (47,48, 51, 52) each having two ends (20, 21, 33, 34) are generated in the connection regions (13, 30) in that
slits (15, 16, 31, 32) or openings are produced in the connection regions (13, 30) for forming the substantially arcuate edges (47, 48, 51, 52);
by production of a further slit (18, 19, 35, 36) or of a further opening at one of the ends (20, 21, 33, 34) of each of the arcuate edges (47, 48, 51, 52), a respective further edge (42, 43, 44, 45) is produced which adjoins it and which extends obliquely or transversely to the arcuate edge (47, 48, 51, 52); and
material sections respectively bordered by the arcuate edge (47, 48, 51, 52) and by the further edge (42, 43, 44, 45) are bent out of the plane of the respective connection region (13, 30) so that one end (20, 21, 33, 34) of the arcuate edge (47, 48, 51, 52) is arranged spaced apart in a direction perpendicular to the plane of the respective connection region (13, 30) and the connection sections (22, 23, 38, 39) each comprise a guide surface (24, 25, 40, 41) extending obliquely to the plane of the respective connection region (13, 30);
**characterized in that**
the components (12, 26) are attached to one another and rotated with respect to one another such that two respective connection sections (22, 23, 38, 39) engage into one another and the respective guide surface (24, 25) of a connection section (22, 23) of the first connection region (13) slides along the guide surface (40, 41) of a connection section (38, 39) of the second connection region (30) until the guide surfaces (24, 25, 40, 41) at least regionally contact one another.

## Revendications

1. Pièce d'assemblage comprenant un premier composant et un second composant (12, 26), dans laquelle le premier composant (12) comporte une première zone de liaison (13) plane de forme aplatie et le second composant (26) comporte une seconde zone de liaison (30) plane de forme aplatie et reliée à la première zone de liaison (13),
dans laquelle les zones de liaison (13, 30) comprennent chacune au moins deux tronçons de liaison (22, 23, 38, 39) qui sont réalisés respectivement comme des tronçons de matière cintrés en sortant du plan de la zone de liaison respective (13, 30),
dans laquelle, lorsque le premier et le second composant (12, 26) sont assemblés, deux tronçons de liaison respectifs (22, 23, 38, 39) s'engagent l'un dans l'autre,
dans laquelle les tronçons de liaison (22, 23, 38, 39) possèdent respectivement une arête (47, 48, 51, 52) réalisée sensiblement en forme d'arc et présentant chacune deux extrémités (20, 21, 33, 34),
dans laquelle l'une des extrémités (20, 21, 33, 34) de l'arête en forme d'arc (47, 48, 51, 52) est agencée à distance de la zone de liaison respective (13, 30) dans une direction perpendiculaire au plan de la zone de liaison respective (13, 30),
dans laquelle une autre arête (42, 43, 44, 45) du tronçon de liaison (22, 23, 38, 39), laquelle s'étend en oblique ou transversalement par rapport à l'arête en forme d'arc (47, 48, 51, 52), se raccorde à cette extrémité (20, 21, 33, 34) de l'arête en forme d'arc (47, 48, 51, 52), et dans laquelle les tronçons de liaison (22, 23, 38, 39) comprennent respectivement une surface de guidage (24, 25, 40, 41) s'étendant en oblique par rapport au plan de la zone de liaison respective (13, 30),
**caractérisée en ce que** la surface de liaison (24, 25) d'un tronçon de liaison (22, 23) de la première zone de liaison (13) et la surface de guidage (40, 41) d'un tronçon de liaison (38, 39) de la seconde zone de liaison (30) sont respectivement réalisées de telle façon que lors de l'assemblage du premier et du second composant (12, 26), elles coulissent l'une contre l'autre et sont appliquées l'une contre l'autre au moins localement lorsque le premier et le second composant (12, 26) sont assemblés.

2. Pièce d'assemblage selon la revendication 1,
**caractérisée en ce que** l'autre extrémité de l'arête en forme d'arc (47, 48, 51, 52) est située dans le plan de la zone de liaison (13, 30).

3. Pièce d'assemblage selon la revendication 1 ou 2,
**caractérisée en ce que** l'extrémité, détournée de l'arête en forme d'arc (47, 48, 51, 52), de l'autre arête (42, 43, 44, 45) est située dans le plan de la zone de liaison (13, 30).

4. Pièce d'assemblage selon l'une au moins des revendications précédentes,
**caractérisée en ce qu'**une ou plusieurs arêtes en forme d'arc (47, 48, 51, 52) est/sont formée(s) par des fentes en forme d'arc (15, 16, 31, 32) ménagées dans la zone de liaison respective (13, 30).

5. Pièce d'assemblage selon l'une au moins des revendications précédentes,
**caractérisée en ce que** les tronçons de liaison (22, 23, 38, 39) d'un composant (12, 26) sont agencés respectivement sur le même côté du composant (12, 26).

6. Pièce d'assemblage selon l'une au moins des revendications précédentes,
**caractérisée en ce que** l'autre arête (42, 43, 44, 45) est réalisée rectiligne.

7. Pièce d'assemblage selon l'une au moins des revendications précédentes,
**caractérisée en ce que** l'autre arête (42, 43, 44, 45) s'étend en direction radiale vers l'extérieur ou vers l'intérieur en partant de l'extrémité (20, 21, 33, 34) de l'arête en forme d'arc (47, 48, 51, 52).

8. Pièce d'assemblage selon l'une au moins des revendications précédentes,
**caractérisée en ce qu'**une ou plusieurs des arêtes en forme d'arc (47, 48, 51, 52) est/sont réalisée(s) sous forme d'arête de forme circulaire partielle, en particulier d'arête en quart de cercle,
et/ou
**en ce que** les tronçons de liaison (22, 23, 38, 39) d'une zone de liaison (13, 30) sont agencés respectivement avec symétrie ponctuelle par rapport à un centre commun (17, 37) des arêtes de forme circulaire partielle (47, 48, 51, 52),
et/ou
**en ce que** les arêtes de forme circulaire partielle (47, 48, 51, 52) possèdent respectivement le même centre (17, 37),
et/ou
**en ce que** les arêtes de forme circulaire partielle (47, 48, 51, 52) d'une zone de liaison (13, 30) possèdent respectivement le même rayon (r₁, r₂).

9. Pièce d'assemblage selon l'une au moins des revendications précédentes,
**caractérisée en ce que** les arêtes de forme circulaire partielle (51, 52) de l'une des zones de liaison (30) possèdent un rayon plus grand (r₂) que les arêtes de forme circulaire partielle de l'autre zone de liaison (13).

10. Pièce d'assemblage selon la revendication 9,
**caractérisée en ce que** l'autre arête (42, 43) qui se raccorde respectivement à une arête de forme circulaire partielle (51, 52) avec le rayon plus grand (r₂) s'étend vers l'intérieur en direction radiale en partant de l'extrémité (33, 34) de l'arête de forme circulaire partielle (51, 52), et **en ce que** l'autre arête (44, 45) qui se raccorde respectivement à une arête de forme circulaire partielle (47, 48) avec le rayon plus petit (r₁) s'étend vers l'extérieur en direction radiale en partant de l'extrémité (20, 21) de l'arête de forme circulaire partielle (47,48).

11. Pièce d'assemblage selon l'une au moins des revendications précédentes,
**caractérisée en ce que** les deux composants (12, 26) et en particulier les zones de liaison (13, 30) sont enclenché(e)s l'un(e) avec l'autre.

12. Pièce d'assemblage selon l'une au moins des revendications précédentes,
**caractérisée en ce que** le premier composant (12) et/ou le second composant (26) est/sont en métal ou en matière plastique.

13. Pièce d'assemblage selon l'une au moins des revendications précédentes,
**caractérisée en ce que** la liaison entre la première et la seconde zone de liaison (30, 13) est réalisée de façon détachable.

14. Dispositif de suspension pour des tringles porteuses, en particulier pour des plafonds suspendus ou similaires, comprenant une pièce de base qui est réalisée afin d'être accouplée avec une tringle porteuse, et comprenant une pièce de liaison présentant l'élasticité d'un ressort et fixée sur la pièce de base, qui est réalisée en vue d'assurer une liaison réglable de la pièce de base avec une pièce de la fixation,
**caractérisé en ce que** le dispositif de suspension est réalisé sous forme d'une pièce d'assemblage selon l'une au moins des revendications précédentes, et la pièce de base est formée par le premier composant (12) et la pièce de liaison est formée par le second composant (26).

15. Procédé pour fabriquer une pièce d'assemblage, en particulier une pièce d'assemblage selon l'une des revendications 1 à 13, comprenant un premier et un second composant (12, 26), dans lequel le premier composant comprend une première zone de liaison (13) plane de forme aplatie et le second composant (26) comprend une seconde zone de liaison (30) plane de forme aplatie et reliée à la première zone de liaison (13),
dans lequel dans les zones de liaison (13, 30) on produit respectivement au moins deux tronçons de liaison (22, 23, 38, 39) présentant chacun une arête (47, 48, 51, 52) réalisée sensiblement en forme d'arc, avec deux extrémités respectives (20, 21, 33, 34), en ménageant des fentes (15, 16, 31, 32) ou des ouvertures dans les zones de liaison (13, 30) pour former les arêtes (47, 48, 51, 52) essentiellement en forme d'arc ;
en pratiquant respectivement une autre fente (18, 19, 35, 36) ou une autre ouverture à l'une des extrémités (20, 21, 33, 34) de l'arête en forme d'arc (47, 48, 51, 52) on engendre une autre arête (42, 43, 44, 45) qui s'étend en oblique ou transversalement par rapport à l'arête en forme d'arc (47, 48, 51, 52) et se raccorde à celle-ci, et
des tronçons de matière respectivement bordés par l'arête en forme d'arc (47, 48, 51, 52) ainsi que par l'autre arête (42, 43, 44, 45) sont cintrés en sortant du plan de la zone de liaison respective (13, 30) de sorte qu'une extrémité (20, 21, 33, 34) de l'arête en forme d'arc (47, 48, 51, 52) est agencée à distance dans une direction perpendiculaire au plan de la zone de liaison respective (13, 30), et les tronçons de liaison (22, 23, 38, 37) incluent chacun une surface de guidage (24, 25, 40, 41) qui s'étend en oblique par rapport au plan de la zone de liaison respective (13, 30),
**caractérisé en ce que** les composants (12, 26) sont placés les uns contre les autres et tournés les uns par rapport aux autres de telle façon que deux tronçons de liaison respectifs (22, 23, 38, 39) s'engagent l'un dans l'autre, et la surface de guidage (24, 25) d'un tronçon de liaison (22, 23) de la première zone de liaison (13) coulisse respectivement le long de la surface de guidage (40, 41) d'un tronçon de liaison (38, 39) de la seconde zone de liaison (30) jusqu'à ce que les surfaces de guidage (24, 25, 40, 41) s'appliquent l'une contre l'autre au moins localement.
